(19) Europäisches Patentamt
European Patent Office
Office européen des brevets

(11) **EP 4 730 244 A2**

(12) **EUROPEAN PATENT APPLICATION**

(43) Date of publication:
**22.04.2026 Bulletin 2026/17**

(21) Application number: **25204455.7**

(22) Date of filing: **24.09.2025**

(51) International Patent Classification (IPC):
**G06Q 20/02** $^{(2012.01)}$ **G06Q 20/06** $^{(2012.01)}$
**G06Q 20/40** $^{(2012.01)}$ **H04L 9/32** $^{(2006.01)}$
**G06Q 20/10** $^{(2012.01)}$

(52) Cooperative Patent Classification (CPC):
**G06Q 20/065; G06Q 20/02; G06Q 20/10; G06Q 20/401; H04L 9/3218**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.09.2024 US 202418899918**

(71) Applicant: **JPMorgan Chase Bank, N.A.**
**New York, NY 10179 (US)**

(72) Inventors:
• **ELOUL, Shaltiel**
**New York, 10179 (US)**
• **PISTOIA, Marco**
**New York, 10179 (US)**
• **BASHIR, Imran**
**New York, 10179 (US)**
• **SATSANGI, Yash**
**New York, 10179 (US)**
• **VALIVETI, Sai Murali Krishna**
**New York, 10179 (US)**

(74) Representative: **Patentanwälte Olbricht Buchhold Keulertz**
**Partnerschaft mbB**
**Neue Mainzer Straße 75**
**60311 Frankfurt am Main (DE)**

(54) **SYSTEMS AND METHODS FOR PRIVATE AND AUDITABLE TRANSACTION PROTOCOL USING SMART CONTRACT ON BLOCKCHAINS**

(57) A method for private and auditable transaction protocol using smart contracts on blockchains. The method includes receiving a deposit of tokenized currency from a participant, maintaining a state for each participant, and receiving a transaction for a payment comprising a commitment to a value, an audit-token, a proof of balance, and a proof of assets. The smart contract verifies the proof of assets and balance, and executes the transaction upon successful verification. The method also includes receiving a cash-out transaction, verifying the zero-knowledge proof, updating the state, and transferring the balance to the participant's account. Additionally, the method involves receiving a commitment to a value of a payment transaction, an audit-token, a consistency proof, and an issuer-token, verifying the commitment, and transferring the value from the payor to the payee by updating their states.

**EP 4 730 244 A2**

**Description**

BACKGROUND OF THE INVENTION

1. Field Of The Invention

Embodiments generally relate to systems and methods for private and auditable transaction protocol using smart contract on blockchains.

2. Description of the Related Art

The ability to conduct private peer-to-peer transactions on blockchain systems, such as Ethereum, are highly desired. Mechanisms that implement such transactions often involve either a trusted party using, for example, Zero-Knowledge Succinct Non-Interactive Argument of Knowledge (zkSnarks)/Zero-Knowledge Scalable Transparent Argument of Knowledge ("zkStarks), or stand-alone blockchains such as zkLedger, private auditable distributed ledgers (e.g., as described in U.S. Patent Application Ser. No. 18/442,989, the disclosure of which is incorporated, by reference, in its entirety), or privacy protecting digital currency (e.g., zcash). These solutions may require other participants on the blockchain to verify the zero-knowledge proofs required for private transaction. Parallel verification by participants can have advantages in terms of speed, but may be prone to human mistakes, collusion among participants, dependence on nodes to be live all the time, etc.

In addition, stand-alone blockchains are in their infancy and many of these ideas are still not completely implemented. Ethereum, however, is the most popular open-sourced decentralized blockchain platform that is designed to be secure, scalable, programmable. It also supports numerous cryptocurrencies such as a stablecoins and web3 applications. Many financial institutions use Ethereum (or a "fork" of Ethereum, such as Quorum) to support their blockchain needs.

SUMMARY OF THE INVENTION

Systems and methods for private and auditable transaction protocol using smart contract on blockchains are disclosed. According to an embodiment, a method may include: (1) receiving, by a smart contract executed in a distributed ledger network, a deposit of tokenized currency from a participant of a plurality of participants of the distributed ledger network; (2) maintaining, by the smart contract, a state for each of the plurality of participants, wherein the state comprises a tokenized currency balance for each of the plurality of participants; (3) receiving, by the smart contract and from one of the participants, a transaction for a payment comprising a commitment to a value of the payment, an audit-token for the participant, a proof of balance, and a proof of assets, wherein the proof of assets comprises a proof of positive commitment and a proof of knowledge of a discrete log, wherein the commitment to the value of the payment is sent to all participants; (4) verifying, by the smart contract, the proof of assets by proving the proof of positive commitment and by verifying a digital signature in the proof of knowledge of the discrete log; (5) verifying, by the smart contract, the proof of balance by proving that a product of the commitment to the value of the payment sent to all the participants is equal to 1; and (6) executing, by the smart contract, the transaction, in response to verification of the proof of assets and verification of the proof of balance.

In one embodiment, the transaction comprises a payment or a cash-out transaction.

In one embodiment, the state is encrypted.

In one embodiment, the method may also include: receiving, by the smart contract, a participant commitment to a value of the transaction, an audit-token, a participant proof of positive commitment, and a participant proof of consistency from the one of the plurality of participants.

In one embodiment, the commitment to a value is encrypted using a Pedersen commitment system.

In one embodiment, wherein an audit-token for the one participant is attached to each commitment.

In one embodiment, the proof of positive commitment comprises a zero-knowledge proof that the commitment in the transaction is to a positive value.

In one embodiment, the proof of balance comprises a zero-knowledge proof that no asset is artificially created.

In one embodiment, the proof of consistency comprises a zero-knowledge proof that a blinding factor in the commitment to the value of the transaction matches a blinding factor in the audit-token.

In one embodiment, the method may also include: updating, by the smart contract, the state for the one participant after the transaction is executed.

In one embodiment, the digital signature comprises a Schnorr signature.

According to another embodiment, a method may include: (1) receiving, by a smart contract executed in a distributed ledger network, a cash-out transaction comprising a zero-knowledge proof claiming a balance from a participant in the distributed ledger network, wherein the smart contract maintains a state for the participant, wherein the state comprises a tokenized currency balance for the participant; (2) verifying, by the smart contract, the zero-knowledge proof using a verification function; (3) updating, by the smart contract, the state for the participant in response to the zero-knowledge proof being verified; and (4) transferring, by the smart contract, the balance to an account for the participant on the distributed ledger.

In one embodiment, the zero-knowledge proof shows that a sum of commitments for a participant is the same as the balance that is claimed.

In one embodiment, the zero-knowledge proof comprises a proof of positive commitment and a proof of knowledge of discrete log.

According to another embodiment, a method may include: (1) receiving, by an issuer and from a payor to a payment transaction, a commitment to a value of the payment transaction, an audit-token for a participant to open the commitment, a consistency proof that shows that the commitment and the audit-token both use a blinding factor, and an issuer-token that allows the issuer to open the commitment; (2) opening, by the issuer, the commitment using the issuer audit-token; (3) verifying, by the issuer using a smart contract, the commitment, wherein the smart contract uses a verification function; and (4) transferring, by issuer and using the smart contract, the value from the payor to a payee by updating a payor state and a payee state, wherein a smart contact maintains a balance for the payor in the payor state, and a balance for the payee in the payee state.

In one embodiment, the commitment to the value is encrypted using a Pedersen commitment system.

In one embodiment, the audit-token for the participant is attached to the commitment to the value.

In one embodiment, the consistency proof comprises a zero-knowledge proof that the blinding factor in the commitment to the value of the payment transaction matches the blinding factor in the audit-token.

In one embodiment, the payor state and the payee state are encrypted.

BRIEF DESCRIPTION OF THE DRAWINGS

For a more complete understanding of the present invention, the objects and advantages thereof, reference is now made to the following descriptions taken in connection with the accompanying drawings in which:

Figure 1 depicts a system for private and auditable transaction protocol using smart contract on blockchains according to an embodiment;

Figure 2 depicts a method for private and auditable transaction protocol using smart contract on blockchains according to an embodiment;

Figure 3 depicts a method for participant cash-out according to an embodiment;

Figure 4 depicts a method for bank-to-bank transactions according to an embodiment;

Figure 5 depicts an exemplary computing system for implementing aspects of the present disclosure.

DETAILED DESCRIPTION OF PREFERRED EMBODIMENTS

Embodiments generally relate to systems and methods for private and auditable transaction protocol using smart contract on blockchains. For example, embodiments may implement a transaction scheme based on zero-knowledge proofs on Ethereum smart contracts that allow users to make private and auditable payments on the blockchain.

Embodiments may use zero-knowledge proofs to ensure that transaction details, such as the value of the payment and the identities of the participants, remain confidential. This allows for private peer-to-peer transactions on a public blockchain, enhancing user privacy.

Embodiments may use smart contracts to perform on-chain verification of the proofs of assets and balance to eliminate the need for external verification from all participants, reducing the risk of human error, collusion, and the dependency on nodes being live at all times.

Embodiments ensure that transactions are legitimate and that the sender has sufficient funds by verifying the proof of positive commitment and the Schnorr signature in the proof of knowledge of the discrete log. This enhances the security of the transaction process.

As used herein, a commit is a cryptographic primitive that allows one to commit to a chosen value or statement while keeping it hidden, but with the ability to reveal the committed value.

Embodiments maintain the integrity and accuracy of the distributed ledger by verifying the proof of balance, which ensures that the product of the commitments to the value of the payment sent to all participants is equal to 1. This prevents the creation of artificial assets.

In embodiments, the smart contract may automatically execute the transaction upon successful verification of the proofs, which reduces the need for manual intervention, speeds up the transaction process, and ensures that only valid transactions are processed.

Embodiments may maintain the state (e.g., the cumulative sum of commitment-token for each participant) for each participant in an encrypted form, ensuring that the balance information is secure and only accessible to the respective participant. This adds an additional layer of security to the system.

Embodiments improve the scalability of the network by eliminating the need for explicit verification from all participants for each transaction. This allows for a higher volume of transactions to be processed efficiently.

Embodiments allow transactions to be conducted in a trustless environment, where participants do not need to trust each other or a central authority. The smart contract and zero-knowledge proofs provide the necessary trust and verification mechanisms.

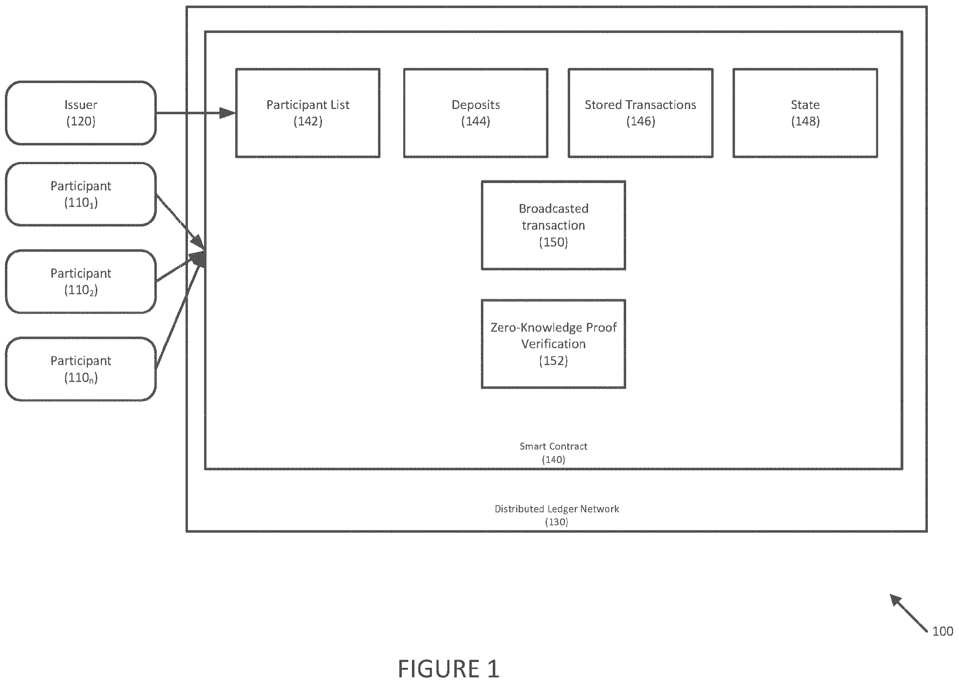

Referring to Figure 1, a system for private and auditable transaction protocol using smart contract on blockchains is disclosed according to an embodiment. System 100 may include participants 110 (e.g., participant $110_1$, participant $110_2$, participant $110_n$), which may be participants on a distributed ledger network 130. Participants 110 may include individuals, companies, banks, etc.

Issuer 120, which may be an issuer of tokenized assets (e.g., tokenized currency, such as blockchain-based digital tokens that represent fiat currency) may also be a participant of distributed ledger network 130.

Distributed ledger network 130 may execute smart contract 140, which may include a plurality of modules. For example, smart contract 140 may include participant list 142, which may identify participants 110, deposits 144, which may maintain a balance for each participant 110, stored transactions 146, which may be a history of transactions involving participants 110, and state 148, which may maintain the current balance for each participant 110.

Smart contract 140 may also include broadcasted transactions 150, which may include proposed transactions that have not been validated. Each transaction may include commitments, audit-tokens, and zero-knowledge proofs. Smart contract 140 may perform the validation of these zero-knowledge proofs, and if transaction is valid, may add the transaction to the stored transactions and may update the state. The updated state and stored transaction may then be accessible to all participants.

Zero-knowledge proof verification 152 may receive transactions from participants 110 and may verify, for example, balances using each participant's state.

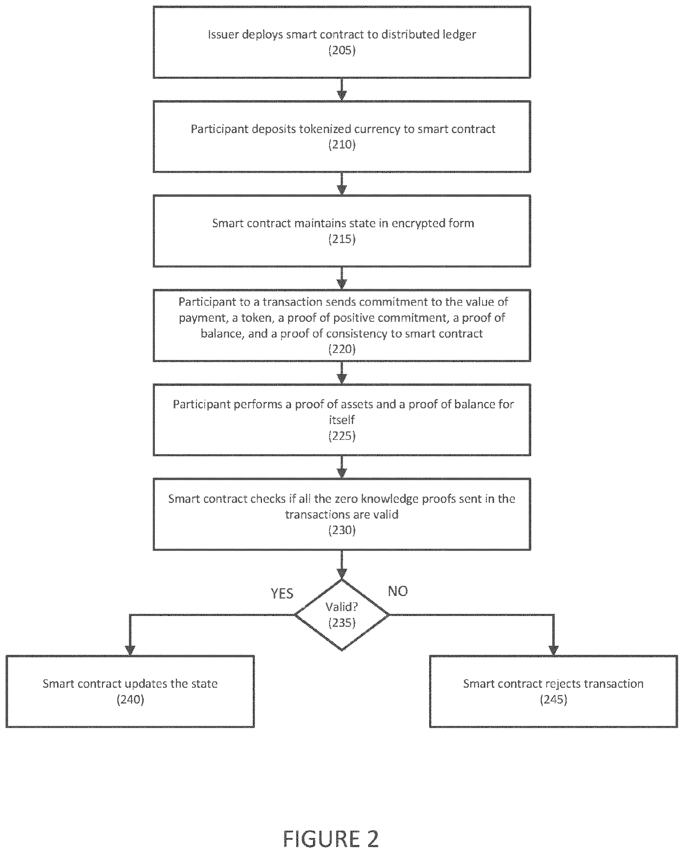

Referring to Figure 2, a method for private and auditable transaction protocol using smart contract on blockchains is disclosed according to an embodiment.

In step 205, an issuer may deploy a smart contract to a distributed ledger network. For example, the issuer may be an issuer of tokenized currency, and the distributed ledger network may be an Ethereum-based ledger network.

The smart contract may be a private auditable distributed ledger smart contract. Examples are disclosed in U.S. Patent Application Ser. No. 18/442,989, the disclosure of which is hereby incorporated, by reference, in its entirety. The smart contract may include functionality to review and validate zero-knowledge proofs.

In step 210, a participant to the distributed ledger network may deposit tokenized currency to the smart contract. For example, the participant may identify an amount of tokenized currency in a digital wallet, and may select to deposit the amount of tokenized currency.

In one embodiment, the tokenized currency may be deposited with the smart contract.

In step 215, the smart contract may maintain a state in encrypted form. For example, the encrypted state may include an encrypted balance for each participant. The balance may be encoded in the form of a commitment-audit-token pair. Each participant can find out its own balance by opening its commitment with its audit-token. A participant can only learn its balance; other participants cannot open (decode) other participant's commitment even if they have access to the commitment.

The audit-token may be generated along with the commitment when the transaction is generated. The audit-token is a token that allows a user to extract a value that is encrypted by a commitment. For example, the audit-token may allow the user to extract the value using the protocol defined in Schnorr signature.

In step 220, a participant to a transaction, such as a payor, may initiate a transaction, such as a payment, a transfer, etc. For example, the participant may generate and send a commitment to a value of a payment, the audit-token, a proof of positive commitment, a proof of balance, and a proof of consistency to the other participants of the distributed ledger network. These proofs may also be sent to the smart contract.

In one embodiment, the payor may generate a specific commitment for each participant.

The commitment to the value of the payment, *cm,* may be encrypted using a Pedersen commitment system. The Pedersen commitment is a cryptographic scheme that allows one to commit to a value while keeping it hidden, yet still enabling the commitment to be verified later. It has strong security properties, such as being perfectly hiding and computationally binding. For example, g, and *h* are two random generators of the cyclic group g. To hide an integer value v, the committer chooses a random point *r,* and computes the commit. $r, v \in [0 .. q]$, where *q* is the number of elements in $G$, $q = |G|$. The commits are perfectly hiding, as for every $v' = v$ a solution, $cm(v, r) = cm(v', r')$ also exists.

For each commitment to the value of the payment, an audit-token, *tk,* may be attached to sign a blinding factor (i.e., a random value that is used to obscure or "blind" the actual value of the data), *r*, with a digital signature scheme, such as a Schnorr signature, on a public-key (*pk*). Examples of Schnorr signatures are provided in Schnorr, C. P., "Efficient Identification and Signatures for Smart Cards, Advances in Cryptology," EUROCRYPT 1989, Lecture Notes in Computer Science, vol 434 (1990), the disclosure of which is hereby incorporated, by reference, in its entirety. The public key for every participant, *pk,* may represent the account address of a participant. It may be generated by the participant choosing a random x-point on an elliptic curve to be its secret key, *sk.* Then, the participant uses its secret key, *sk,* and the generator, *h* to obtain $pk = h^{sk}$.

The audit-token allows a participant to extract the value using brute-force approach. For example, a participant *p* can take a commit $cm(v, r)$ and the audit-token, *tk,* which is either committed by itself or by others, and with its secret-key, can calculate $cm^{sk}/tk$ to obtain $g^v$. Participant *p* can then validate v, or find v by a brute-force approach (checking for every possible value of v which is an integer). This enables committing a value for a participant without interaction with the participant.

The proof of positive commitment, $\pi_p^+$, is a zero-knowledge proof that the commitment to the value of the payment in the transaction is to a positive value. This proof tells the participant that the value of the payment added to its column/account is positive, that is, it is receiving a payment (not sending). The proof of positive commitment may be built and verified using the protocol described in the following paper to Boudot, F., "Efficient Proofs that a Committed Number Lies in an Interval," In: Preneel, B. (eds) Advances in Cryptology - EUROCRYPT 2000 (2000) available at doi.org/10.1007/3-540-45539-6_31, the disclosure of which is hereby incorporated, by reference in its entirety.

To prove positive commitment, the first participant may break the positive value it wants to commit into a sum of four squares, and may make four different commitments to those values, adding in turn for each value an equivalence proof to show that it is a positive value.

The proof of balance, $\pi_p^b$, is a zero-knowledge proof that no asset is artificially created by proving that a product of all commitment to a value of a payment for all participants is 1.

For example, for each transaction, the commitment and audit-tokens are generated such that the sum of values v and the sum of blinding factors *r* across all participants are zero. That is:

$$\textstyle\sum_p v_p = 0 \text{ and } \sum_p r_p = 0.$$

Thus, the product of commitments *cm* is:

$$\textstyle\prod_p cm_p = \prod_p g^{\{v_p\}} h^{\{r_p\}} = g^{\{\sum_p v_p\}} h^{\{\sum_p r_p\}} = g^0 h^0 = 1$$

Since the sum of values v and the sum of blinding factors *r* is equal to zero, product of commitments is $g^0 h^0 = 1$.

The proof of consistency, $\pi_p^c$, is a zero-knowledge proof that blinding factor in the commitment *(cm)* matches the blinding factor in the audit-token *(tk)*. This proof may be built and verified using sigma protocols *(i.e.,* the same as zkledger) and relies on general result of Maurer, U. "Zero-Knowledge Proofs of Knowledge for Group Homomorphisms," Design, Codes, and Cryptology 77 pp. 663-676 (2015), the disclosure of which is hereby incorporated, by reference, in its entirety.

In step 225, the participant may generate a proof of assets and a proof of balance for itself. The proof of balance may be the same proof generated in step 220. The participant may send the proofs as part of transaction to the smart contract, and the smart contract may verify from the proof that the person has enough asset to propose the transaction.

The proof of asset may be a combination of the proof of positive commitment and a proof of knowledge of discrete log. The proof of discrete log may be generated and verified by protocol described in Schnorr, C. P., "Efficient Identification and Signatures for Smart Cards, Advances in Cryptology," EUROCRYPT 1989, Lecture Notes in Computer Science, vol 434 (1990), the disclosure of which is hereby incorporated, by reference, in its entirety.

In order for a transaction to be valid, the participant must show that it has enough funds to carry out the transaction. The participant can show this by proving that the sum of commitments in its column including the current transaction is a positive value. The participant may make a complimentary commitment to its amount of asset it holds, including the current transaction, and then proving that it is a positive value. Furthermore, the participant may show that the complimentary commitment opens to same value as sum of commitments in its own column using a zero-knowledge proof.

In one embodiment, the participant may also generate a complimentary audit-token and a complimentary proof of consistency. The complimentary commitment may be included in the proof of asset to prove/verify knowledge of discrete log. The complimentary audit token and complimentary proof of consistency have the same role as any audit-token and proof of consistency, that is, complimentary audit-tokens lets a participant extract value from complimentary commitment and proof of consistency proves they share the same blinding factor.

The proof of balance, as noted above, is a zero-knowledge proof that no asset is artificially created by proving sum of blinding factors across all participants (including the first participant) is zero.

In step 230, the smart contract may verify all proofs. For example, using a verification function that is deployed as part of the smart contract, the smart contract may verify, from the proofs received from the participant.

If in step 235, the zero-knowledge proof is valid, in step 240, the smart contract may update the state. For example, the smart contract may update its balances for the sender, the recipient, etc.

If the zero-knowledge proof is not valid, in step 245, the smart contract may reject the transaction.

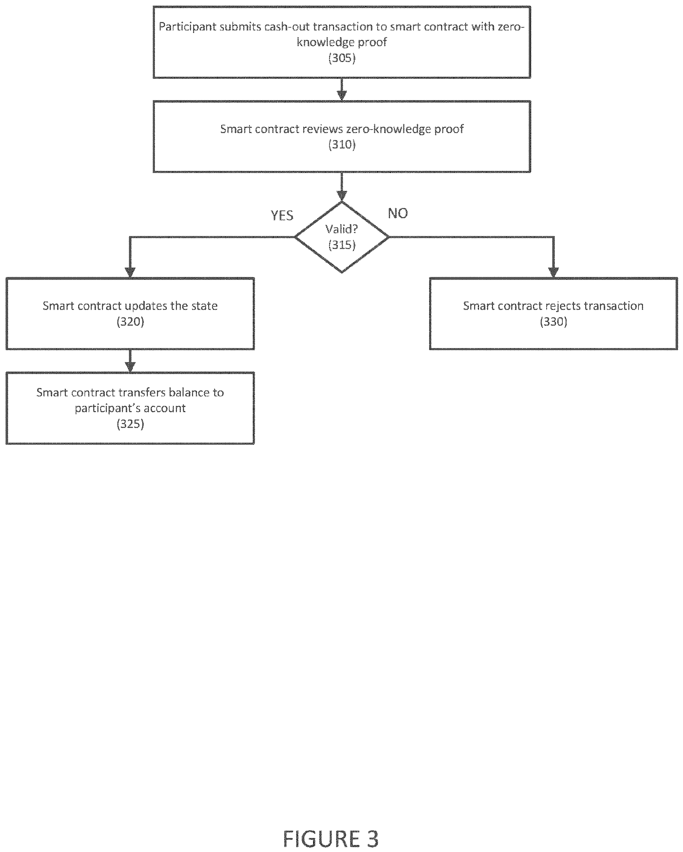

Referring to Figure 3, a method for a participant cash-out is provided according to an embodiment.

In step 305, a participant to a distributed ledger network may submit a cash-out transaction to a smart contract. The cash-out transaction may include a zero-knowledge proof, $\pi_{ab}$, claiming a balance. The zero-knowledge proof, $\pi_{ab}$, may show that the sum of the commitments in the participant's column is the same as the value claimed. For example, the participant may generate these proofs on its local machine using any existing libraries, such as those described U.S. Patent Application Ser. No. 18/442,989, the disclosure of which is incorporated, by reference, in its entirety, or APIs for generating zero-knowledge proof.

In step 310, the smart contract may review the zero-knowledge proof, $\pi_{ab}$ to determine if it is valid. For example, the smart contract may use a verification function to verify that the zero-knowledge proof, $\pi_{ab}$ is valid, and that the participant has the funds requested in its balance.

The verification function computes the product of commitments divided by g raised to $v\left(\frac{\Pi_t cm_{t,p}}{g^{\{v\}}} = c_1\right)$ and product of tokens ($\Pi_t tk_{\{t,p\}} = c_2$). The function computes these quantities from the ledger. Then it verifies that $dlog_{\{c_1\}}(c_2) = dlog_{\{h\}}(pk)$ via a zero knowledge proof using Mauerer's protocol (described in Maurer, U., "Unifying Zero-Knowledge Proofs of Knowledge," In: Preneel, B. (eds) Progress in Cryptology - AFRICACRYPT (2009), the disclosure of which is hereby incorporated, by reference, in its entirety).

The proof may include that the sum of commitments in the state and the sum of commitment that the participant is trying to make sums up to a positive quantity. Because the state of the smart contract is encrypted, the proof is required to prove that the state of the transaction and the new transaction commitment do not lead to overspending. The proof includes a proof of positive commitment and a proof that two commitments hide same positive value that is further proved via a proof of knowledge of discrete log. The proof of knowledge of discrete log may be shown via protocol in Schnorr signature, similar to that used in step 225.

If, in step 315, the zero-knowledge proof, $\pi_{ab}$, is valid, in step 320, the smart contract may update the state by adding commitments sent in the transaction and the encrypted state.

In step 325, the smart contract may transfer the value (i.e., the balance) to an account of participant's choice on blockchain.

If the zero-knowledge proof, $\pi_{ab}$, is not valid, in step 330, the smart contract may reject the transaction, and the state remains unchanged.

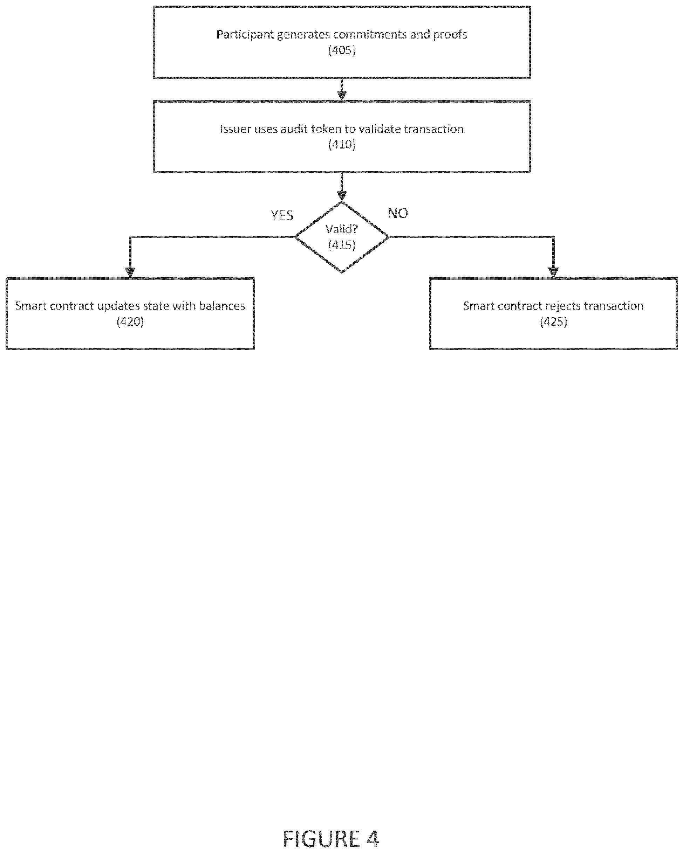

Referring to Figure 4, a method for direct bank transactions is provided according to an embodiment. For example, the smart contract enables participating banks to make peer-to-peer (direct) private transaction to each other. In this case, private transaction implies that the other participants on the blockchain are not able to learn the value of assets moved in a transaction.

The settlement bank acts as a trusted entity that can access the bank balance of participating banks. This is required so that the settlement bank can comply with auditors and regulatory bodies. For example, the participants may be two different banks that are participants on the smart contract / distributed ledger network. The participants may wish to complete a transaction with the settlement bank acting a intermediary trusted party that helps transfer funds from one participant to another.

In step 405, for each participant, including itself, a payor to a transaction may generate (a) a commitment to the value of the payment, (b) an audit-token for the participant to open the commitment, (c) a consistency proof to show that commitment and audit-token use the same blinding factor, and (d) an issuer-token that allows the issuer (e.g., the settlement bank) to open the commitment.

In step 410, the issuer/settlement bank may use its audit-token to validate the transaction. For example, the issuer/settlement bank can use its audit-token to open the commitments necessary to validate the transaction, along with using functionality of smart contract to validate the transaction. In one embodiment, the smart contact may include a verification function that may verify the proofs.

If, in step 415, the transaction is valid (i.e., the payor has sufficient balance), in step 420, the smart contract may transfer the value of the transaction (e.g., the amount of the transaction) from the payor to the payee by updating the state of the payor and the payee. For example, the smart contact maintains internal balance of each participant.

When the participant wishes to "cash-out" this balance is then transferred to an account of participant's choice on blockchain.

If, in step 415, the transaction is not valid (i.e., the payor has insufficient balance), in step 425, the smart contract may reject the transaction.

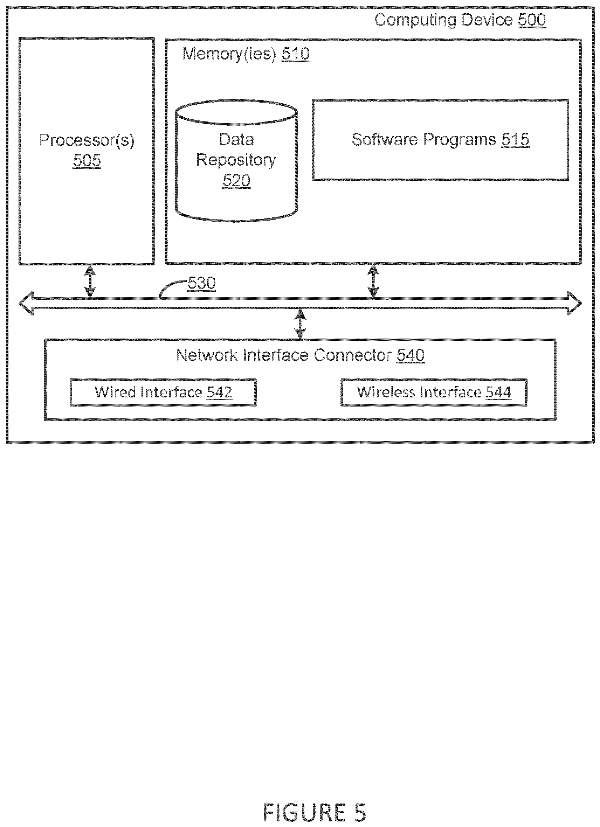

Figure 5 depicts an exemplary computing system for implementing aspects of the present disclosure. Figure 5 depicts exemplary computing device 500. Computing device 500 may represent the system components described herein. Computing device 500 may include processor 505 that may be coupled to memory 510. Memory 510 may include volatile memory. Processor 505 may execute computer-executable program code stored in memory 510, such as software programs 515. Software programs 515 may include one or more of the logical steps disclosed herein as a programmatic instruction, which may be executed by processor 505. Memory 510 may also include data repository 520, which may be nonvolatile memory for data persistence. Processor 505 and memory 510 may be coupled by bus 530. Bus 530 may also be coupled to one or more network interface connectors 540, such as wired network interface 542 or wireless network interface 544. Computing device 500 may also have user interface components, such as a screen for displaying graphical user interfaces and receiving input from the user, a mouse, a keyboard and/or other input/output components (not shown).

Although several embodiments have been disclosed, it should be recognized that these embodiments are not exclusive to each other and features from one embodiment may be used with others.

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:

   receiving, by a smart contract executed in a distributed ledger network, a deposit of tokenized currency from a participant of a plurality of participants of the distributed ledger network;
   maintaining, by the smart contract, a state for each of the plurality of participants, wherein the state comprises a tokenized currency balance for each of the plurality of participants;
   receiving, by the smart contract and from one of the participants, a transaction for a payment comprising a commitment to a value of the payment, an audit-token for the participant, a proof of balance, and a proof of assets, wherein the proof of assets comprises a proof of positive commitment and a proof of knowledge of a discrete log, wherein the commitment to the value of the payment is sent to all participants;
   verifying, by the smart contract, the proof of assets by proving the proof of positive commitment and by verifying a digital signature in the proof of knowledge of the discrete log;
   verifying, by the smart contract, the proof of balance by proving that a product of the commitment to the value of the payment sent to all the participants is equal to 1; and
   executing, by the smart contract, the transaction, in response to verification of the proof of assets and verification of the proof of balance.

2. The method of claim 1, wherein the transaction comprises a payment or a cash-out transaction.

3. The method of claim 1, wherein the state is encrypted.

4. The method of claim 1, further comprising:
   receiving, by the smart contract, a participant commitment to a value of the transaction, an audit-token, a participant proof of positive commitment, and a participant proof of consistency from the one of the plurality of participants.

5. The method of claim 4, wherein the commitment to a value is encrypted using a Pedersen commitment system.

6. The method of claim 4, wherein an audit-token for the one participant is attached to each commitment.

7. The method of claim 4, wherein the proof of positive commitment comprises a zero-knowledge proof that the commitment in the transaction is to a positive value.

8. The method of claim 4, wherein the proof of balance comprises a zero-knowledge proof that no asset is artificially created.

9. The method of claim 4, wherein the proof of consistency comprises a zero-knowledge proof that a blinding factor in the commitment to the value of the transaction matches a blinding factor in the audit-token.

10. The method of claim 1, further comprising:
    updating, by the smart contract, the state for the one participant after the transaction is executed.

11. The method of claim 1, wherein the digital signature comprises a Schnorr signature.

12. A method, comprising:

receiving, by a smart contract executed in a distributed ledger network, a cash-out transaction comprising a zero-knowledge proof claiming a balance from a participant in the distributed ledger network, wherein the smart contract maintains a state for the participant, wherein the state comprises a tokenized currency balance for the participant;

verifying, by the smart contract, the zero-knowledge proof using a verification function;

updating, by the smart contract, the state for the participant in response to the zero-knowledge proof being verified; and

transferring, by the smart contract, the balance to an account for the participant on the distributed ledger.

13. The method of claim 12, wherein the zero-knowledge proof shows that a sum of commitments for a participant is the same as the balance that is claimed.

14. The method of claim 12, wherein the zero-knowledge proof comprises a proof of positive commitment and a proof of knowledge of discrete log.

15. A method, comprising:

receiving, by an issuer and from a payor to a payment transaction, a commitment to a value of the payment transaction, an audit-token for a participant to open the commitment, a consistency proof that shows that the commitment and the audit-token both use a blinding factor, and an issuer-token that allows the issuer to open the commitment;

opening, by the issuer, the commitment using the issuer audit-token;

verifying, by the issuer using a smart contract, the commitment, wherein the smart contract uses a verification function; and

transferring, by issuer and using the smart contract, the value from the payor to a payee by updating a payor state and a payee state, wherein a smart contact maintains a balance for the payor in the payor state, and a balance for the payee in the payee state.

16. The method of claim 15, wherein the commitment to the value is encrypted using a Pedersen commitment system.

17. The method of claim 15, wherein the audit-token for the participant is attached to the commitment to the value.

18. The method of claim 15, wherein the consistency proof comprises a zero-knowledge proof that the blinding factor in the commitment to the value of the payment transaction matches the blinding factor in the audit-token.

19. The method of claim 15, wherein the payor state and the payee state are encrypted.

FIGURE 1

```
┌─────────────────────────────────────────────────────┐
│   Issuer deploys smart contract to distributed ledger│
│                        (205)                          │
└─────────────────────────────────────────────────────┘
                           │
                           ▼
┌─────────────────────────────────────────────────────┐
│  Participant deposits tokenized currency to smart     │
│                      contract                         │
│                        (210)                          │
└─────────────────────────────────────────────────────┘
                           │
                           ▼
┌─────────────────────────────────────────────────────┐
│      Smart contract maintains state in encrypted form │
│                        (215)                          │
└─────────────────────────────────────────────────────┘
                           │
                           ▼
┌─────────────────────────────────────────────────────┐
│ Participant to a transaction sends commitment to the  │
│ value of payment, a token, a proof of positive        │
│ commitment, a proof of balance, and a proof of        │
│ consistency to smart contract                         │
│                        (220)                          │
└─────────────────────────────────────────────────────┘
                           │
                           ▼
┌─────────────────────────────────────────────────────┐
│ Participant performs a proof of assets and a proof of │
│ balance for itself                                    │
│                        (225)                          │
└─────────────────────────────────────────────────────┘
                           │
                           ▼
┌─────────────────────────────────────────────────────┐
│ Smart contract checks if all the zero knowledge proofs│
│ sent in the transactions are valid                    │
│                        (230)                          │
└─────────────────────────────────────────────────────┘
                           │
                           ▼
                YES    ◇ Valid?      NO
                      (235)
         ┌──────────────┘      └──────────────┐
         ▼                                     ▼
┌───────────────────────┐         ┌───────────────────────────┐
│Smart contract updates │         │ Smart contract rejects     │
│      the state        │         │      transaction           │
│        (240)          │         │        (245)               │
└───────────────────────┘         └───────────────────────────┘
```

FIGURE 2

FIGURE 3

Participant generates commitments and proofs
(405)

Issuer uses audit token to validate transaction
(410)

YES          NO
Valid?
(415)

Smart contract updates state with balances
(420)

Smart contract rejects transaction
(425)

FIGURE 4

FIGURE 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 442989

**Non-patent literature cited in the description**

- **SCHNORR, C. P.** Efficient Identification and Signatures for Smart Cards, Advances in Cryptology. *EUROCRYPT*, 1989
- *Lecture Notes in Computer Science*, 1990, vol. 434
- Efficient Proofs that a Committed Number Lies in an Interval. **BOUDOT, F.** Advances in Cryptology - EUROCRYPT 2000. 2000

- **MAURER, U.** Zero-Knowledge Proofs of Knowledge for Group Homomorphisms. *Design, Codes, and Cryptology*, 2015, vol. 77, 663-676
- Unifying Zero-Knowledge Proofs of Knowledge. **MAURER, U.** Progress in Cryptology - AFRICA-CRYPT. 2009